Europäisches Patentamt

(19) European Patent Office

Office européen des brevets

(11) Numéro de publication: **0 064 476**
A1

## (12) DEMANDE DE BREVET EUROPEEN

(21) Numéro de dépôt: 82810153.5

(22) Date de dépôt: 07.04.82

(51) Int. Cl.³: **H 01 S 3/13**

(30) Priorité: 10.04.81 CH 2420/81

(43) Date de publication de la demande:
10.11.82 Bulletin 82/45

(84) Etats contractants désignés:
CH DE GB LI

(71) Demandeur: ASULAB S.A.
6, Passage Max Meuron
CH-2001 Neuchâtel(CH)

(72) Inventeur: Spring, Peter
Hombergstrasse 17
CH-3612 Steffisburg(CH)

(72) Inventeur: Steffen, Jürg, Dr.
Dorf
CH-3655 Sigriswil(CH)

(74) Mandataire: Klein, André Gilbert
Société Générale de l'Horlogerie Suisse S.A. ASUAG 6,
Faubourg du Lac
CH-2501 Biel/Bienne(CH)

(54) Dispositif de stabilisation d'émission d'un résonateur laser selon un mode d'émission déterminé.

(57) L'invention concerne un dispositif de stabilisation d'émission laser.

Le dispositif comprend des éléments piézo-électrique (242) d'adaptation de la distance séparant les miroirs du résonateur en fonction d'un signal représentatif de la distribution d'intensité périphérique des maxima d'intensité constitutifs du mode d'émission. Ce signal est obtenu à partir d'un système de détection (25) du profil d'émission du faisceau laser comprenant un écran partiel (250) réfléchissant les intensités inférieures à un seuil d'intensité donnée et transmettant les intensités supérieures à ce seuil, d'un détecteur d'intensité (252) et d'un calculateur (241).

Application à la stabilisation d'émission laser en mode fondamental TEMoo ou supérieur.

Tig. 1

700.75-BE

Dispositif de stabilisation d'émission d'un résonateur laser selon un mode d'émission déterminé.

La présente invention est relative à un dispositif de stabilisation d'émission selon un mode d'émission déterminé d'un résonateur laser.

De nombreuses applications des dispositifs d'émission de lumière cohérente, émission laser, notamment les applications aux machines-outils d'usinage, d'estampage, de gravure et de perçage nécessitent une émission laser de haute stabilité à laquelle doit être ajoutée une grande précision des paramètres de configuration du faisceau d'émission en vue d'assurer, lors de l'utilisation, une excellente reproductibilité des effets sur la pièce à usiner.

Dans la plupart des cas, l'émission laser engendrée en mode fondamental, mode TEMoo, est préférée en raison des qualités intrinsèques de ce mode d'émission, section du faisceau d'émission laser sensiblement circulaire et distribution d'intensité lumineuse en fonction de la distance au centre du faisceau répartie selon une courbe de Gauss.

Dans d'autres applications, telles que le traitement de surface de matériaux en vue de durcissage, "annealing", séchage, fixation ou polymérisation et les procédées biochimiques, l'émission laser est de préférence engendrée selon des modes d'émission d'ordre supérieur, notamment en vue d'obtenir des densités d'énergie sensiblement uniformes avec un nombre minimal d'émetteurs de rayonnement laser par unité de surface à traiter.

Des dispositifs de stabilisation d'émission laser ont été décrits en particulier dans le brevet suisse 604 391 et dans le brevet américain 4 103 254. Ces dispositifs sont cependant destinés à la stabilisation de la fréquence d'émission laser par commande d'éléments piézo-électriques en vue de modifier l'accord du résonateur, la commande étant effectuée à partir d'un signal représentatif du désaccord du résonateur.

D'autres dispositifs ont été décrits en particulier dans le brevet allemand 1 950 943. Ce dispositif est plus spécialement destiné à assurer une stabilisation d'intensité d'émission laser pour un laser à gaz.

Les dispositifs décrits dans les documents précités ne permettent pas cependant une stabilisation sélective d'un mode déterminé car d'une part, dans le premier cas, la stabilisation est une stabilisation en fréquence dans laquelle la sélection de mode ne peut être effectuée par la seule détection de fréquence, et, d'autre part, dans le deuxième cas, la stabilisation d'intensité est assurée par référence à la seule proportionnalité du courant de décharge du laser à gaz indépendamment du mode d'émission.

La présente invention permet de remédier aux inconvénients précités et a pour objet un dispositif permettant la stabilisation de l'intensité d'émission et/ou de la fréquence d'émission d'un résonateur selon un mode déterminé.

Un autre objet de la présente invention est un dispositif permettant la stabilisation d'émission selon un mode déterminé.

Le dispositif de stabilisation d'émission selon l'invention est défini par l'ensemble des caractéristiques techniques exposées ci-après.

Les dispositifs conformes à l'invention peuvent avantageusement être utilisés dans toute machine d'usinage ou de traitement par laser dans laquelle une stabilisation de l'émission selon un mode déterminé est en particulier obtenue conformément au brevet suisse 545 544 au nom de la demanderesse par optimalisation des paramètres du résonateur.

L'invention sera mieux comprise à l'aide de la description et des dessins ci-après dans lesquels la figure 1 représente un dispositif conforme à l'invention; les figures 2a, 2b et 2c, 2d représentent pour une émission laser en mode fondamental TEMoo et en mode d'ordre supérieur TEMol respectivement, un détail de réalisation de l'objet de l'invention; les figures 3a à 3e représentent différents schémas explicatifs et les figures 4a et 4b un mode de réalisation particulier de l'invention.

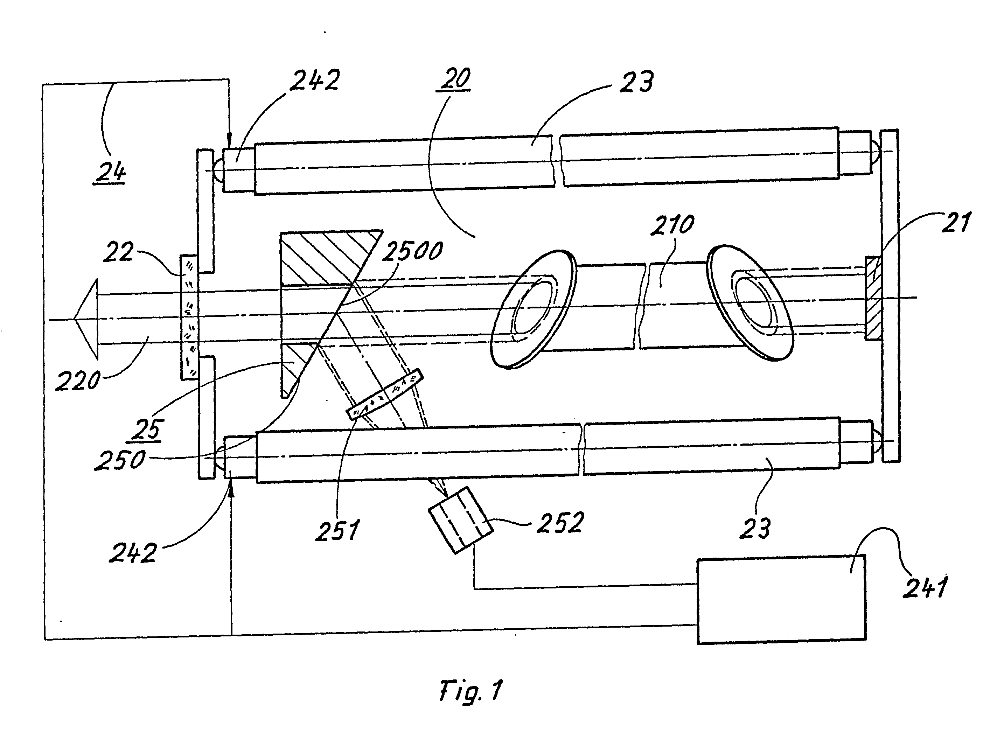

Selon la figure 1, le dispositif selon l'invention permet la stabilisation d'émission d'un résonateur laser 20 comprenant un miroir de réflexion 21 et un miroir de couplage 22 permettant la transmission du faisceau de sortie 220. Les miroirs 21 et 22 sont montés en vis-à-vis sur le corps du résonateur. Sur la figure 1, un tube d'émission laser 210 a été représenté, le laser pouvant, à titre d'exemple non limitatif, être un laser à gaz ou un laser à corps solide. Le corps du résonateur 20 comporte par exemple une infrastructure rigide pratiquement insensible à la dilatation. Cette infrastructure peut être constituée par des barreaux en invar 23. Des éléments piézo-électriques 242 permettent une adaptation de la distance séparant les miroirs 21 et 22 en fonction d'un signal représentatif de l'intensité d'émission. Le dispositif comporte en outre un dispositif de détection 25 permettant de détecter le profil d'émission du faisceau laser 220. Le dispositif de détection 25 permet d'engendrer un signal représentatif de la distribution d'intensité périphérique des maxima d'intensité constitutifs du mode d'émission considéré. Ce signal permet la commande de la position relative des miroirs 21 et 22 en vue de l'asservissement de l'émission sur le mode considéré. Par mode d'émission on entend mode d'émission axial, c'est-à-dire répartition des champs électrique et magnétique du rayonnement selon une direction parallèle à la direction de propagation du faisceau laser et/ou mode d'émission transversal, c'est-à-dire répartition des champs électrique et magnétique du rayonnement selon un plan perpendiculaire à la direction de propagation du faisceau laser. Le mode d'émission transversal comprend aussi bien les modes d'émission transversaux à symétrie rectangulaire que les modes d'émission à symétrie circulaire. Les modes d'émission axiaux et traversaux sont physiquement dépendants, en particulier, de la géométrie du résonateur. Une variation de longueur du résonateur entraîne une variation de l'intensité du faisceau de sortie 220, et corrélativement apparaît la série des différentes longueurs d'onde des transitions avec des coefficients d'amplification différents. Dans le cas d'un laser à gaz $CO_2$ en particulier, dans les conditions habituelles d'émission, le plus grand coefficient d'amplification est obtenu pour la transition P20. Chacune des transitions possibles dans un laser $CO_2$ présente une courbe de gain fonction de la fréquence, une intensité maximale d'émission étant atteinte lorsqu'un mode axial correspond au maximum d'amplification.Pour une transition donnée telle que P20 par exemple,la position du maximum d'amplification est déterminée par la fréquence d'émission.La position des modes axiaux est cependant fonction du chemin optique entre les miroirs 21 et 22 du résonateur lequel est lui-même fonction de paramètres tels que la distance séparant les miroirs et de leur rayon de courbure, le courant de décharge du tube à gaz, la pression du gaz dans le tube, la température, l'existence dans le résonateur d'éléments optiques particuliers tels que, ainsi que représenté figure 1, fenêtres de sortie du rayonnement laser sous incidence de Brewster ou lentilles additionnelles ou télescope permettant la diminution de la longueur physique du résonateur. Ces paramètres sont soumis, au cours du fonctionnement, à des variations dues à des origines diverses telles que par exemple modulation de la pression du gaz par la pompe, non représentée figure 1 pour raisons de clarté, assurant la circulation de ce gaz dans le tube. Ces variations provoquent des perturbations de l'intensité du faisceau laser de sortie 220 et de ses qualités de distribution d'intensité inhérentes à chaque mode d'émission transversal. Le dispositif selon l'invention permet, compte tenu de ces variations, le maintien de la longueur optique du résonateur sensiblement constante pour un mode d'émission transversal déterminé par compensation des variations du chemin optique en fonction des paramètres précités. Dans le cas du laser à gaz, en particulier à gaz $CO_2$, le maintien d'un mode axial en position de gain maximal, pour une intensité de sortie maximale, permet également une stabilisation de la fréquence d'émission laser puisque la fréquence de résonance du résonateur permettant l'obtention du gain maximal pour la transition considérée est fonction biunivoque de la longueur optique du résonateur. Une telle stabilisation est particulièrement utile dans le cas d'applications du laser à la spectroscopie. Sur la figure 1, l'adaptation ou maintien de la longueur optique du résonateur 20 est effectuée au moyen d'un système 24 d'adaptation de la position relative des miroirs 21, 22 comportant par exemple un calculateur 241 recevant le signal représentatif de la distribution d'intensité périphérique des maxima d'intensité constitutifs du mode d'émission considéré et délivrant aux éléments piézo-électriques 242 un signal de commande.

Conformément au schéma de la figure 1, le dispositif de détection 25 du profil d'émission du faisceau laser permet de prélever, du faisceau laser 220, la distribution d'intensité périphérique des maxima d'intensité constitutifs du mode transversal. Le dispositif de détection 25 permet en outre de détecter le niveau d'intensité de cette distribution périphérique pour engendrer un signal représentatif de l'intensité du mode considéré. Le dispositif de détection 25 comprend un écran partiel 250 disposé sur le trajet du faisceau laser. L'écran 250 peut indifféremment être disposé à l'intérieur ou à l'extérieur du résonateur 20. Le dispositif de détection 25 comporte en outre une lentille de focalisation 251 et un detecteur 252 sensible au rayonnement laser intercepté par l'écran partiel 250. Le détecteur 252 délivre le signal représentatif de la distribution d'intensité périphérique des maxima d'intensité constitutifs du mode.

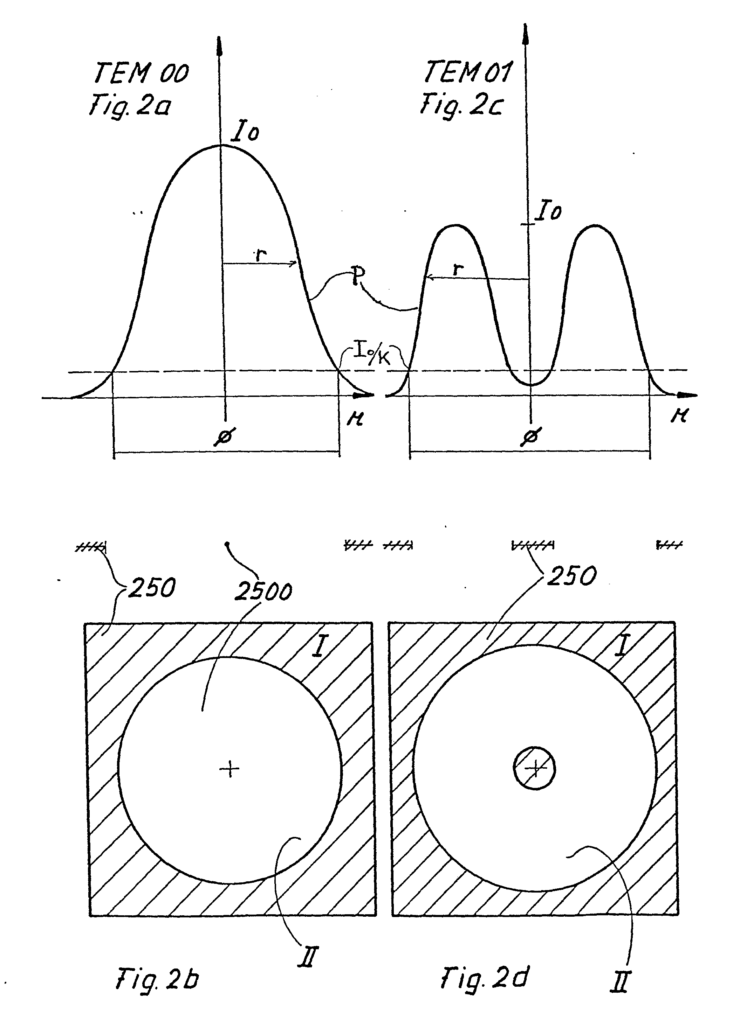

Ainsi que représenté de manière plus détaillée figures 2a,2b,2c, 2d, l'écran partiel 250 comporte un arrangement de zones totalement réfléchissants I, comportant des hachures sur les figures 2b et 2d, et des zones totalement transparentes II. Les zones totalement transparentes sont disposées en vis-à-vis des zones du faisceau, ainsi que représenté figures 2a et 2c, d'intensité I supérieure à $\alpha \frac{Io}{k}$. Le coefficient k est un coefficient supérieur à 1 permettant de définir le diamètre utile $\emptyset$ des maxima d'intensité constitutifs du mode. Sur les figures 2a et 2c la distribution d'intensité correspond à un mode d'émission fondamental TEMoo et à un mode d'émission d'ordre supérieur TEMo1, la distribution d'intensité I étant représentée en fonction de r distance radiale par rapport à l'axe du faisceau laser.

Dans le cas d'émission en mode fondamental la distribution d'intensité du faisceau est sensiblement identique à une distribution Gaussienne et le coefficient k est égal à $e^2$ avec e $\simeq$ 2,7. Le coefficient $\alpha$ est compris entre 0,8 et 0,55 sensiblement. Les zones totalement réfléchissantes sont disposées en vis-à-vis des zones du faisceau d'intensité I inférieure à $\alpha \frac{Io}{k}$, $\alpha$ et k étant définis précédemment, Io représentant l'intensité maximale de chaque maxima d'intensité constitutif du mode.

Ainsi que représenté figure 2a, dans le cas d'une émission en mode fondamental, le dispositif permettant de prélever la distribution d'intensité périphérique du faisceau comprend un diaphragme réfléchissant disposé sur le trajet du faisceau laser et comportant une ouverture 2500 sensiblement circulaire. L'ouverture 2500 est centrée sur l'axe du faisceau laser, le voisinage réfléchissant du bord de l'ouverture du diaphragme interceptant la distribution périphérique d'intensité du faisceau laser. Ainsi que représenté figure 1, la lentille 251 permet la focalisation du rayonnement intercepté par le bord de l'ouverture du diaphragme. La lentille 251 forme
une image de la distribution périphérique d'intensité du ou des maxima du mode d'émission considéré au niveau de la surface sensible
du détecteur 252. Le diaphragme est incliné par rapport à la direction de propagation du faisceau laser. Le coefficient $\alpha$ défini précédemment permet, compte tenu de l'inclinaison du diaphragme, ou de l'écran
partiel, de définir un diamètre d d'ouverture du diaphragme ou de
la zone totalement transparente, compris entre 1,2 à 1,8 fois le
diamètre utile $\phi$ du faisceau en mode fondamental ou mode d'ordre supérieur. L'inclinaison du diaphragme ou de l'écran partiel et le diamètre d de l'ouverture du diaphragme sont choisis de manière à provoquer
l'interception et la réflexion d'une distribution périphérique
d'intensité représentant de 1 à 2 % de la puissance totale du faisceau laser.

Ainsi que représenté figure 2d, dans le cas d'une émission en mode
d'ordre supérieur, le diaphragme comportant l'ouverture 2500 est remplacé par un écran partiel constitué par exemple par une lame transparente
au rayonnement laser. Dans le cas d'un laser $CO_2$ la lame peut être constituée par une lame de tellurure de cadmium ou chlorure de potassium. Cette
dernière comporte en vis-à-vis des zones du faisceau d'intensité inférieure à $\alpha \frac{Io}{k}$ une métallisation totalement réfléchissante permettant l'interception de la distribution d'intensité périphérique des maximas d'intensité du mode considéré. Par zone totalement réfléchissante il faut entendre zone dont le coefficient de réflexion est supérieur ou égal à 99,8%
et par zone totalement transparente il faut entendre zone dont le coefficient de réflexion est inférieur à 0,2% pour la longueur d'onde du rayonnement laser correspondant, par exemple une lame parallèle sous incidence de Brewster avec métallisation.

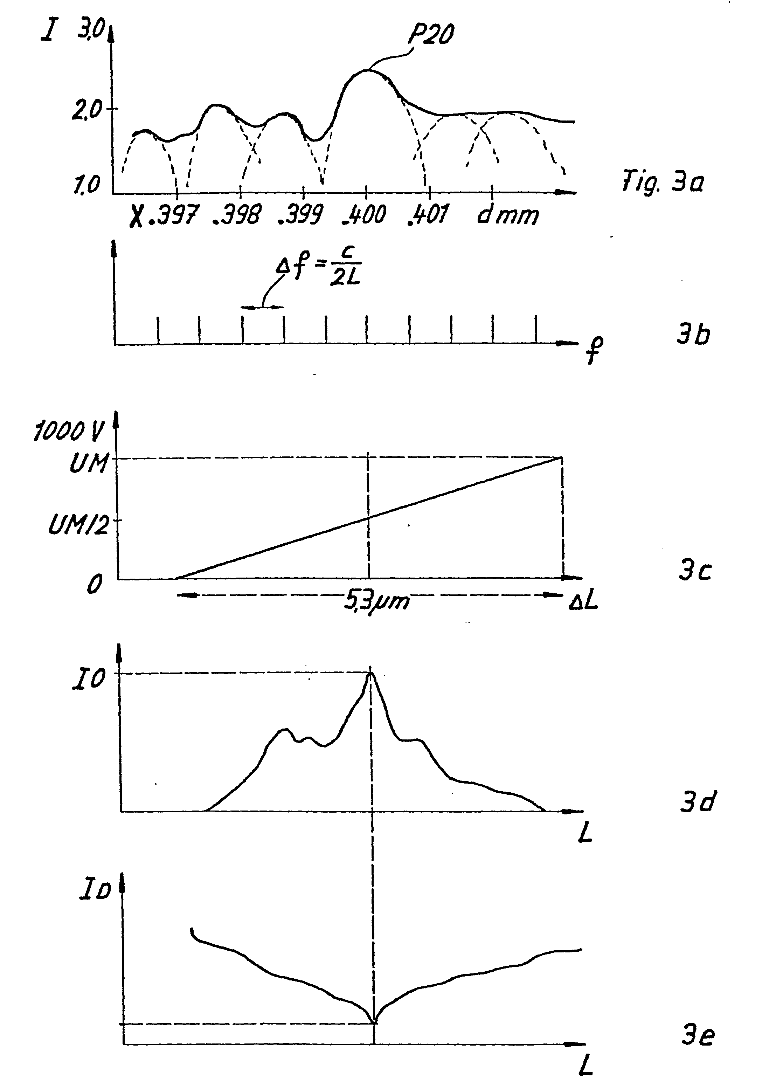

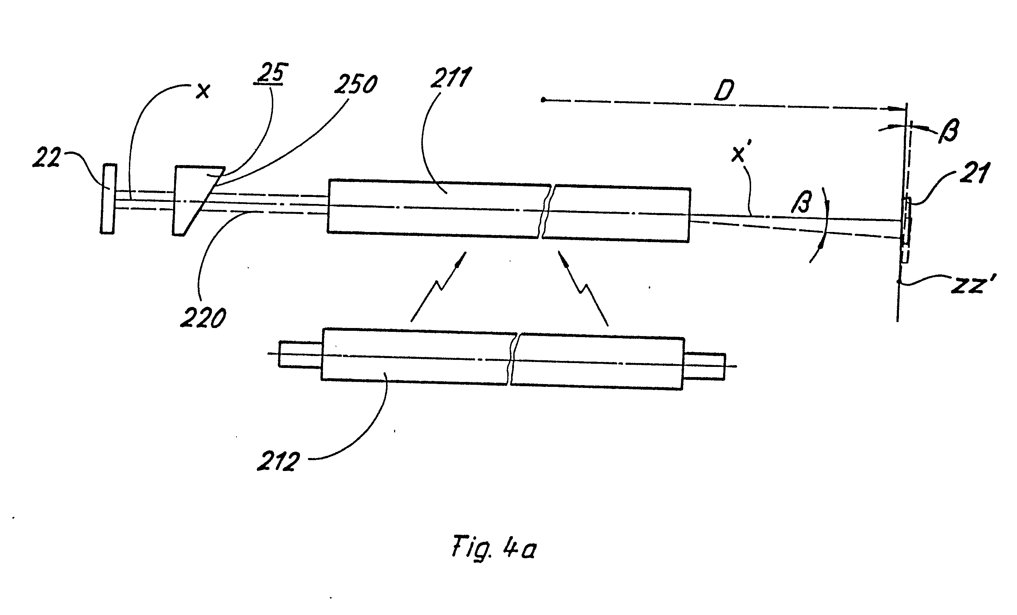

Le fonctionnement du dispositif peut être établi comme ci-après compte tenu des figures 2a, 2b, 2c, 2d et 3. La disposition des zones totalement réfléchissantes au delà des lignes d'iso-intensité $\alpha \frac{I_o}{k}$ , pour les intensités inférieures à cette valeur, permet la détection d'une intensité périphérique minimale pour chaque maxima d'intensité constitutif du mode d'émission considéré du fait de la pente P important de la courbe de distribution $I(r)$ pour les valeurs de r inférieures à ro tel que $I_{(ro)} = \frac{I_o}{k}$ . Une désadaptation de mode a pour effet la diminution des maxima Io et de la pente P et corrélativement l'accroissement très important de l'intensité périphérique détectée.

Un tel résultat peut être mis en évidence par les figures 3a à 3e dans lesquelles apparaît nettement une corrélation entre le maximum d'intensité Io, figure 3d, du faisceau laser transmis en sortie et le minimum correspondant d'intensité périphérique détecté $I_D$, figure 3e. Les conditions expérimentales correspondant aux résultats des figures 3a à 3e étaient les suivantes: émission laser $CO_2$ en mode fondamental à la longueur d'onde $\simeq$ 10,59 μm transition P20. Une rampe de tension, figure 3c, d'amplitude 1000 V a, pour celà, été appliquée aux éléments piézo-électriques 241 pour provoquer un allongement total de la longueur optique du résonateur de l'ordre de 5.3 μm. L'émission en mode fondamental à la transition P20 est obtenue avec une intensité maximale pour une tension sensiblement égale à la demi-amplitude de la rampe. L'application de la rampe de tension aux éléments piézo-électriques permet par l'allongement de la longueur du résonateur d'une quantité voisine de $\frac{\lambda}{2}$ d'effectuer un balayage correspondant de l'ensemble des modes d'émission axiaux du résonateur représentés figure 3b par rapport aux courbes de gain du milieu actif $CO_2$ représentées figures 3a et en particulier de la courbe de gain de la transition P20 en vue de la recherche du maximum d'intensité d'émission pour le mode axial considéré. La puissance maximale peut donc être obtenue, par variation de la longueur du résonateur,pour le mode fondamental de différents modes axiaux dont la fréquence d'émission diffère sensiblement de $\Delta f = \frac{c}{2L}$ où c est la vitesse de propagation de la lumière dans le vide et L la longueur optique du résonateur. Pour un mode axial donné, en coïncidence avec le maximum de la courbe de gain de la courbe P20, il existe plusieurs modes transversaux d'ordre supérieur de fréquence d'émission légèrement différente correspondant au phénomène de dispersion des raies du spectre du résonateur. Le dispositif selon l'invention permet en particulier au moyen de l'écran partiel de réflexion de la distribution périphérique des maxima d'intensité de privilégier un mode transversal particulier par adaptation de la longueur du résonateur laser en vue du gain maximum de la transition P20 pour le mode transversal considéré. Le maintien de ce mode d'émission transversal en position de gain maximal est assuré, après le choix de la fréquence centrale correspondant à une longueur d'onde de 10,59 µm en mode fondamental, par modulation de la valeur moyenne du signal appliqué aux éléments piézo-électriques et correction de cette valeur moyenne en fonction de paramètres du signal représentatifs de l'intensité périphérique détectée compte tenu de la non linéarité de la courbe de réponse de l'intensité périphérique détectée au voisinage du minimum d'intensité du signal détecté ID. Le signal ID délivré par le détecteur 252, un détecteur infrarouge, présente un minimum en coïncidence avec le maximum d'intensité du faisceau. Le signal délivré par le détecteur 252 proportionnel à l'intensité périphérique des maxima est représentatif de celle-ci et de l'émission selon le mode considéré.

Compte tenu des résultats expérimentaux précédents, il est aisé de comprendre que le détecteur 252 recevant de la lentille de focalisation 251 les faisceaux interceptés et délivrant un signal $I_D$ proportionnel à l'intensité du rayonnement intercepté au calculateur 241, ce même calculateur 241, et, les éléments piézo-électriques 242 recevant du calculateur un signal de commande représentatif de l'adaptation de la position relative des miroirs 21, 22, constituent une chaîne d'asservissement de la longueur optique du résonateur 20 pour régler la transition choisie avec le maximum d'amplification du mode axial considéré et la stabilisation correspondante de la transition selon un mode transversal déterminé pour l'obtention d'une intensité maximale du faisceau de sortie.

Dans le cas d'un résonateur pour laser à gaz $CO_2$ émettant par exemple en mode fondamental, les éléments piézo-électriques 242 permettent la déformation du résonateur selon une direction parallèle à la direction de propagation du faisceau laser. Dans ce cas l'adaptation de la position relative des miroirs consiste en une adaptation de la distance séparant les miroirs.

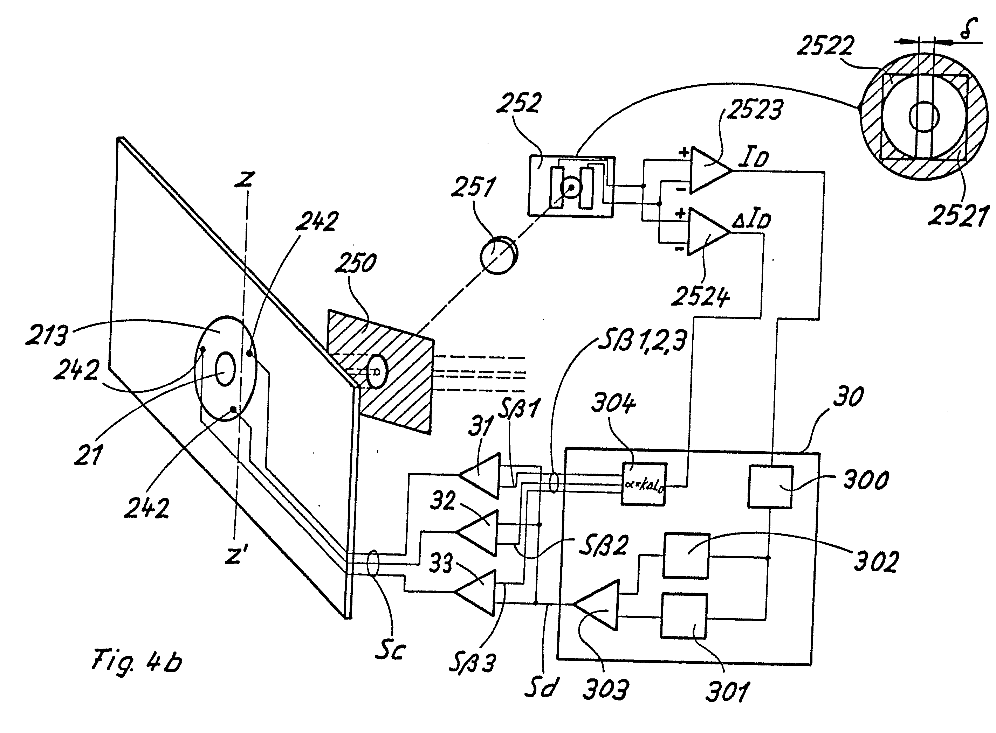

Dans le cas d'un résonateur pour laser à corps solide tel que rubis, Nd-YAG ou Nd Glass, ainsi que représenté schématiquement figure 4a, les éléments piézo-électriques 242 permettent la déformation du résonateur 20 d'une part selon une direction parallèle à la direction de propagation du faisceau laser et d'autre part selon deux angles de rotation par rapport à un axe contenu dans un plan perpendiculaire à la direction de propagation du faisceau laser. Dans ce cas, l'adaptation de la position relative des miroirs consiste en une adaptation de la distance séparant les miroirs et de l'angle d'incidence du faisceau laser sur le miroir. Ainsi que représenté figure 4a, le barreau laser 211et la lampe à décharge d'excitation 212 matérialisent un plan. L'axe du faisceau laser est désigné par XX' dans ce plan. Au cours du fonctionnement le barreau laser se comporte, du point de vue optique,comme un prisme en raison des gradients de température affectant la valeur de l'indice de réfraction du milieu de propagation du faisceau laser. Les paramètres physiques de ce prisme sont variables dans le temps en raison notamment de la diminution du rendement, en raison de son vieillissement, de la lampe à décharge d'excitation, le bilan de transfert d'énergie lumineuse d'excitation et la distribution du gradient de température étant ainsi modifiés. Il s'en suit une rotation d'un angle β, dans le plan défini précédemment, du faisceau laser. Cet angle peut atteindre quelques milliradians après 1000 heures de fonctionnement. Le miroir 21, miroir de couplage du résonateur, est alors soumis à une rotation d'un même angle β par rapport à un axe ZZ' contenu dans un plan perpendiculaire à la direction de propagation X'X du faisceau laser de manière que le miroir reste perpendiculaire à l'axe optique du faisceau X'X. La rotation du miroir peut être appliquée aux miroirs 22 et 21 séparément ou en combinaison.

Selon un mode de réalisation particulier représenté figure 4b, le calculateur 241 comporte un circuit 30 de calcul du signal de commande de la position relative des miroirs. Le circuit de calcul 30 délivre un premier signal Sd de correction de distance séparant les miroirs. Le circuit de calcul 30 comporte à cet effet un circuit 300 analyseur de spectre recevant le signal $I_D$ délivré par le détecteur 252 et un circuit de correction 301 piloté par le circuit analyseur de spectre 300 et délivrant une tension continue valeur moyenne du signal Sd délivré par le calculateur 30. Un générateur de signal sinusoïdal 302 superpose à la tension continue délivrée par le circuit de correction 300 un signal de modulation sinusoïdal par l'intermédiaire d'un amplificateur sommateur 303. Le signal de modulation a une fréquence comprise entre quelques centaines de kiloherz et quelques mégaherz. L'amplitude du signal de modulation est de l'ordre de 5% de l'amplitude de la tension continue délivrée par le circuit de correction 301. Le signal détecté ID est modulé par un signal périodique produit du signal sinusoïdal de modulation et de la caractéristique non linéaire au voisinage du minimum de l'intensité détectée $I_D$. L'analyse harmonique du signal $I_D$ par l'analyseur de spectre 300 permet le pilotage du circuit de correction 301 pour l'ajustage de l'amplitude de la tension continue constitutive du signal Sd pour l'obtention du gain maximal pour le mode axial donné en fonction des paramètres d'analyse harmonique du signal $I_D$ modulé. De tels circuits ne seront pas décrits car ceux-ci sont bien connus de l'homme de l'art. A titre d'exemple la quasi symétrie de la courbe d'intensité détectée $I_D$ par rapport au minimum permet de définir un spectre de Fourier caractéristique de la position d'équilibre au maximum de gain de la transition P20 choisie. Le calculateur 30 délivre également un deuxième signal Sβ de correction d'angle d'incidence du faisceau laser sur le miroir considéré. Le signal Sβ est engendré par un circuit de calcul 304 délivrant par exemple trois signaux élémentaires Sβ 1,2,3

tels que $S\beta1 = k1 \Delta I_D$, $S\beta2 = k2 \Delta I_D$, $S\beta3 = k3 \Delta I_D$. Le circuit de calcul 304 reçoit le signal $\Delta I_D$ du détecteur 252 par l'intermédiaire d'un amplificateur différentiel 2524. Le signal $\Delta I_D$ est représentatif de la rotation d'angle $\beta$ du faisceau par rapport à l'axe primitif X' X. A cet effet, à titre d'exemple, comme représenté figure 4b, le détecteur 252 comporte deux zones sensibles au rayonnement laser 2522 et 2521 de surface identique. Les deux zones sont séparées par un intervalle $\delta$ aussi faible que possible. Chaque zone alimente les entrées positives d'un amplificateur sommateur 2523 délivrant le signal $I_D$ représentatif de l'intensité totale du faisceau et respectivement l'entrée positive et négative de l'amplificateur différentiel 2524. L'image de l'intensité périphérique des maxima d'intensité du faisceau laser est formée par la lentille de focalisation 251 au centre de la séparation des deux zones sensibles. Dans la direction de rotation du faisceau, les détecteurs ont une dimension suffisante. Des circuits sommateurs 31, 32, 33 reçoivent chacun le signal Sd et respectivement le signal $S\beta1$, $S\beta2$, $S\beta3$.

Le miroir 21 est solidaire d'un support 213 mécaniquement solidaire du corps du résonateur laser 20 par l'intermédiaire de trois éléments piézo-électriques 242. Les trois éléments sont disposés au sommet d'un triangle équilatéral , deux d'entre eux étant par exemple disposés sur l'axe Z Z' précédemment défini. Chacun des éléments piézo-électriques reçoit d'un sommateur 31, 32, 33 un signal composite permettant l'orientation et le décalage convenable du miroir 21. L'ensemble des signaux composites constitue le signal de commande S c de la position relative des miroirs. La détermination des valeurs

k1, k2, k3 des signaux S β 1, S β 2, S β 3 par le circuit de calcul 304 permet l'orientation du miroir 21 par seule rotation autour de l'axe Z Z' ou par composition de mouvement de rotation par rapport aux axes matérialisés par deux éléments piézo-électriques. Tout mode de réalisation dans lequel le calculateur 30 est constitué par un micro-processeur permettant le calcul numérique des valeurs de correction à partir des signaux $I_D$ et $\Delta I_D$, après transformation par convertisseur analogique numérique, ne sort pas du cadre de la présente invention. Tout mode de réalisation dans lequel la détermination des sens de variation de la puissance lumineuse détectée à la périphérie du faisceau est effectuée par d'autres moyens ne sort pas du cadre de la présente invention.

REVENDICATIONS

1. Dispositif de stabilisation d'émission selon un mode d'émission déterminé d'un résonateur laser comprenant un miroir de réflexion et un miroir de couplage montés en vis-à-vis sur le corps du résonateur et des moyens d'adaptation de la distance séparant lesdits miroirs en vis-à-vis en fonction d'un signal représentatif de l'intensité d'émission, caractérisé en ce qu'il comporte des moyens de détecter le profil d'émission du faisceau laser permettant d'engendrer un signal représentatif de la distribution d'intensité périphérique des maxima d'intensité constitutifs de ce mode, ledit signal permettant la commande de la position relative desdits miroirs.

2. Dispositif selon la revendication 1, caractérisé en ce que les moyens de détecter le profil d'émission du faisceau laser comportent:

- des moyens de prélever, du faisceau laser, la distribution d'intensité périphérique des maxima d'intensité constitutifs du mode,

- des moyens de détecter le niveau d'intensité de ladite distribution périphérique pour engendrer un signal représentatif de l'intensité du mode considéré.

3. Dispositif selon la revendication 2, caractérisé en ce que les moyens de prélever, du faisceau laser, la distribution d'intensité périphérique des maxima d'intensité constitutifs de ce mode comportent:

- un écran disposé sur le trajet du faisceau laser et comportant un arrangement de zones totalement réfléchissantes et de zones totalement transparentes, les zones totalement transparentes étant disposées en vis-à-vis des zones du faisceau d'intensité I supérieure à $\alpha \dfrac{Io}{k}$ où k est un coefficient supérieur à 1 permettant de définir le diamètre utile des maxima d'intensité constitutifs du mode, et $\alpha$ un coefficient compris entre 0,8 et 0,55 sensiblement, les zones totalement réfléchissantes étant disposées en vis-à-vis des zones du faisceau d'intensité I inférieure à $\alpha \dfrac{Io}{k}$ où $\alpha$ et k sont les paramètres définis précédemment et Io l'intensité maximale de chaque maxima d'intensité du mode.

4. Dispositif selon l'une des revendications précédentes, caractérisé en ce que dans le cas d'une émission en mode fondamental lesdits moyens de prélever, du faisceau laser, la distribution d'intensité périphérique de ce faisceau comportent:

- un diaphragme réfléchissant, disposé sur le trajet du faisceau laser, l'ouverture du diaphragme sensiblement circulaire étant centrée sur l'axe du faisceau laser, le voisinage réfléchissant du bord de l'ouverture du diaphragme interceptant ladite distribution périphérique d'intensité du faisceau laser,

- une lentille de focalisation du rayonnement intercepté par le bord de l'ouverture du diaphragme.

5. Dispositif selon la revendication 4, caractérisé en ce que le diaphragme est incliné par rapport à la direction de propagation du faisceau laser.

6. Dispositif selon la revendication 4, caractérisé en ce que l'ouverture du diaphragme a un diamètre d compris entre 1,2 à 1,8 fois le diamètre utile ∅ du faisceau laser, 1,2 ∅ ≤ d ≤ 1,8 ∅.

7. Dispositif selon les revendications 5 et 6, caractérisé en ce que l'inclinaison du diaphragme par rapport à la direction de propagation du faisceau et le diamètre d de l'ouverture du diaphragme permettent l'interception et la réflexion d'une distribution périphérique d'intensité représentant une fraction de 1 à 2 % de la puissance totale du faisceau laser.

8. Dispositif selon l'une des revendications 1 à 3, caractérisé en ce que dans le cas d'une émission en mode d'ordre supérieur, lesdits moyens de prélever, du faisceau laser, la distribution d'intensité périphérique du faisceau comportent:

- une lame transparente disposée sur le trajet du faisceau laser, ladite lame comportant en vis-à-vis des zones du faisceau d'intensité I inférieure à $\alpha \dfrac{I_o}{k}$ une métallisation totalement réfléchissante permettant l'interception de la distribution périphérique des maxima d'intensité du mode considéré,

- une lentille de focalisation du rayonnement intercepté par la métallisation.

9. Dispositif selon l'une des revendications précédentes, caractérisé en ce que les moyens de détecter le niveau d'intensité de la distribution périphérique du faisceau laser comprennent un détecteur sensible au rayonnement laser, ledit détecteur recevant de la lentille de focalisation les faisceaux interceptés, ledit détecteur délivrant un signal proportionnel à l'intensité du rayonnement intercepté.

10. Dispositif selon l'une des revendications précédentes, caractérisé en ce que les moyens d'adapter la position relative desdits miroirs comportent:

- un calculateur recevant le signal délivré par le détecteur,
- des éléments piézo-électriques disposés dans le corps du résonateur, lesdits éléments piézo-électriques recevant du calculateur un signal de commande représentatif de l'adaptation de la position relative des miroirs, lesdits éléments piézo-électriques permettant la déformation correspondante du résonateur.

11. Dispositif selon la revendication 10, caractérisé en ce que dans le cas d'un résonateur pour laser à gaz $CO_2$ lesdits éléments piézo-électriques permettent la déformation du résonateur selon une direction parallèle à la direction de propagation du faisceau laser, l'adaptation de la position relative des miroirs consistant en une adaptation de la distance séparant les miroirs.

12. Dispositif selon la revendication 10, caractérisé en ce que dans le cas d'un résonateur pour laser à corps solide, lesdits éléments piézo-électriques permettent la déformation du résonateur d'une part selon une direction parallèle à la direction de propagation du faisceau laser et d'autre part selon un angle de rotation par rapport à un axe contenu dans un plan perpendiculaire à la direction de propagation du faisceau laser, l'adaptation de la position relative des miroirs consistant en une adaptation de la distance séparant les miroirs et de l'angle d'incidence du faisceau laser sur le miroir correspondant.

Fig. 1

TEM 00
Fig. 2a

$I_0$

r

P

$I_0/K$

$\emptyset$

M

TEM 01
Fig. 2c

$I_0$

r

$\emptyset$

M

250

2500

I

II

Fig. 2b

250

I

II

Fig. 2d

Tig. 3a

$$\Delta f = \frac{c}{2L}$$

3b

3c

3d

3e

*Fig. 4a*

Fig. 4b

0064476

**0064476**

Office europeen
des brevets

**RAPPORT DE RECHERCHE EUROPEENNE**

Numero de la demande

EP 82 81 0153

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Cl. 3) |
|---|---|---|---|
| | PATENT ABSTRACT OF JAPAN, vol. 5, no. 11 (E-42)(683), 23 janvier 1981, & JP - A - 55 141 772 (KOGYO GIJUTSUIN) 5 novembre 1980. | | H 01 S 3/13 |
| Y | * en entier * | 1-5,9, 11 | |
| A | * figure * | 12 | |
| | -- | | |
| | US - A - 3 575 671 (B. SESSUS et al.) | | |
| Y | * figures 2-4; revendications 3-8 * | 1-5,9, 11 | |
| A | * figures 2-3 * | 10 | DOMAINES TECHNIQUES RECHERCHES (Int Cl. 3) |
| | -- | | H 01 S 3/13 H 01 S 3/098 |
| A | RADIO ENGINEERING AND ELECTRONIC PHYSICS, vol. 19, no. 2, février 1974 WAHINGTON (US) YE.T. ANTROPOV et al.: "Automatic Frequency Control of a Selective $CO_2$ Laser by Means of a Piezoelectric Device", pages 59-62. | | |
| | * figure 2 * | 1-2,10 -11 | |
| | ------ | | |

Le present rapport de recherche a ete etabli pour toutes les revendications

| Lieu de la recherche | Date d'achevement de la recherche | Examinateur |
|---|---|---|
| LA HAYE | 14-07-1982 | FARNESE |